## Europäisches Patentamt

## European Patent Office

## Office européen des brevets

(19)

(11) Veröffentlichungsnummer: **0 282 907 B1**

(12) **EUROPÄISCHE PATENTSCHRIFT**

(45) Veröffentlichungstag der Patentschrift :
05.06.91 Patentblatt 91/23

(51) Int. Cl.$^5$: **E03F 3/04, E03F 7/04**

(21) Anmeldenummer : 88103783.2

(22) Anmeldetag : 10.03.88

(54) **Reinigungsrohr für Abwässer oder Fäkalien.**

(30) Priorität : 17.03.87 DE 3708552

(43) Veröffentlichungstag der Anmeldung :
21.09.88 Patentblatt 88/38

(45) Bekanntmachung des Hinweises auf die
Patenterteilung :
05.06.91 Patentblatt 91/23

(84) Benannte Vertragsstaaten :
AT BE CH DE FR LI NL

(56) Entgegenhaltungen :
EP-A- 0 047 482
CH-A- 615 988
FR-A- 2 138 326
US-A- 3 794 360

(73) Patentinhaber : Kessel, Bernhard
Bahnhofstrasse 31
W-8071 Lenting (DE)

(72) Erfinder : Kessel, Bernhard
Bahnhofstrasse 31
W-8071 Lenting (DE)

(74) Vertreter : Sasse, Volker, Dipl.-Ing.
Parreutstrasse 27
W-8070 Ingolstadt (DE)

**Beschreibung**

Die Erfindung betrifft ein Reinigungsrohr der im Oberbegriff des Patentanspruchs 1 angegebenen Art.

Bekannte Reinigungsrohre haben einen einstückigen Grundkörper, an dem vorne und hinten die beiden Anschlußrohrstutzen einstückig angeformt sind. Für jede Rohr-Nennweite ist eine Baugröße eines Reinigungsrohres erforderlich. Da die beiden Anschlußrohrstutzen üblicherweise voneinander verschieden sind (Spitzende und Stumpfende), ist es erforderlich, bei nicht passenden Anschlußrohren Zwischenrohre zu benutzen, um beispielsweise an beiden Enden Spitzenden oder Stumpfenden zu haben. Da der Hersteller bzw. der Großhändler Reinigungsrohre für alle Rohrnennweiten und Anschlußarten bereitstellen muß, ist mit dem bekannten Bauprinzip ein hoher Formaufwand für die Herstellung und eine aufwendige Lagerhaltung verbunden, was sich zwangsweise im Endpreis jedes Reinigungsrohres niederschlägt. Ferner ist beim Einbau des Reinigungsrohres an der Baustelle keine Möglichkeit mehr gegeben, eine individuelle Anpassung vorzunehmen.

Bei einem aus der EP-A2-0047482 bekannten Reinigungsrohr ist eine Baukasten-Bauweise realisiert, da bei der Montage des Reinigungsrohres an den relativ kurzen Grundkörper an dessen Vorder- und Hinterseite als getrennt hergestellte Formteile ausgebildete Anschlußrohrstutzen angeflanscht bzw. angeschraubt werden. Dies vereinfacht die Herstellung vor allem des Grundkörpers. Da die Anschlußkragen an der Vorder- und an der Hinterseite des Grundkörpers voneinander verschieden sind, sind die Anschlußrohrstutzen am Grundkörper nicht gegeneinander vertauschbar. Ein Austausch eines vorderen oder hinteren Anschlußrohrstutzens gegen einen verschieden großen vorderen oder hinteren anderen Anschlußrohrstutzen ist nicht beabsichtigt. Ungünstig ist ferner, daß die Befestigungselemente an über den Umriß des Reinigungsrohres deutlich nach außen ragenden Ohren angreifen und mühsam anzuziehen bzw. zu lösen sind.

Der Erfindung liegt die Aufgabe zugrunde, ein Reinigungsrohr der eingangs genannten Art zu schaffen, das in universeller Weise an unterschiedliche Rohrnennweiten und Anschlußarten anpaßbar ist.

Die gestellte Aufgabe wird erfindungsgemäß mit den im kennzeichnenden Teil des Patentanspruchs 1 angegebenen Merkmalen gelöst. Es wird für unterschiedliche Rohrnennweiten und Anschlußarten nur eine Baugröße des U-förmigen Grundkörpers benötigt, weil Anschlußrohrstutzen, die mit ihren Flanschen zum Grundkörper passen und mittels der Spannverschlüsse wahlweise anbringbar und abnehmbar sind, jeweils auf die Rohrnennweite und/oder auf die Anschlußart abgestimmt sein können. An ein- und demselben Grundkörper können nämlich wahlweise verschiedene Anschlußrohrstutzen mit unterschiedlichen Rohrnennweiten angebracht werden. Die Anschlußrohrstutzen am Vorder- und Hinterende des Grundkörpers können auch gegeneinander vertauscht werden. Schließlich ist es möglich, am Vorder- und am Hinterende gleiche Anschlußrohrstutzen anzubringen. Die Lagerhaltung ist vereinfacht, da nur eine entsprechende Anzahl verschiedener Anschlußrohrstutzen mit gleichen Anschlußflanschen und nur eine einzige Grundkörperbaugröße benötigt werden. Das Reinigungsrohr ist unmittelbar an der Baustelle einfach an die vorliegenden Bedingungen anpaßbar. Es ist sogar möglich, ein bereits benutztes Reinigungsrohr nachträglich umzurüsten. Besonders zweckmäßig ist es, daß Anschlußrohrstutzen benutzt werden können, die mit Steinzeug-Kanalysationsrohren kompatibel sind, so daß der Grundkörper auch für diesen Fall benutzbar ist, für den ein herkömmliches Reinigungsrohr nicht brauchbar wäre.

Hohe Spannbelastungen des Spannverschlusses werden dann zuverlässig aufgenommen, wenn die Merkmale von Anspruch 2 gegeben sind. Die Widerlager lassen sich problemlos in den Grundkörper integrieren.

Eine besonders zweckmäßige Ausführungsform geht aus Anspruch 3 hervor. Bei dieser Ausbildung wird ein sehr zuverlässiger Formschluß zwischen dem Flansch des Anschlußrohrstutzens und dem Anschlußkragen erreicht. Das Spannband übt eine Anzugswirkung aus, die zu einer dichten und belastbaren Verbindung führt, die trotzdem rasch lösbar ist.

Die Belastbarkeit der Verbindungsstelle wird weiterhin gemäß Anspruch 4 gesteigert.

Zweckmäßig ist dabei die Maßnahme von Anspruch 5. Die Dichtung wird durch das Anziehen mittels des Spannbandes komprimiert.

Günstig ist ferner der Gedanke von Anspruch 6, weil das Spannband mit dem Spannelement kräftig angezogen werden kann. Die Montage ist einfach und kann auf der Baustelle mit den dort vorliegenden Werkzeugen ohne weiteres durchgeführt werden.

Eine weitere, besonders einfache Ausführungsform geht aus Anspruch 7 hervor. Nach Lösen der Schraube kann das Spannband gänzlich abgenommen werden. Umgekehrt wird zum Festlegen des Spannbandes nur das Ende des Spannbandes eingeführt und die Schraube entsprechend angezogen.

Eine andere, alternative Ausführungsform geht aus Anspruch 8 hervor. Hierbei kann das Spannband ohne Spezialwerkzeug angelegt und gespannt werden.

Zweckmäßig ist ferner die Ausführungsform von Anspruch 9, weil bei dieser das Spannband praktisch einen geschlossenen Ring bildet, der für einen festen Sitz des Adapterteils im Grundkörper sorgt.

Anhand der Zeichnung werden nachstehend Ausführungsformen des Erfindungsgegenstandes erläutert.

Es zeigen

Fig. 1 einen Längsschnitt durch ein Reinigungsrohr,

Fig. 2 ein unter Verwendung der Komponenten von Fig. 1 abgewandeltes Reinigungsrohr,

Fig. 3 ein Detail aus den vorhergehenden Figuren im Schnitt,

Fig. 4 eine Stirnansicht des Reinigungsrohres von Fig. 1, teilweise im Schnitt,

Fig. 5 eine Detailvariante im Schnitt und

Fig. 6 eine weitere Detailvariante im Schnitt.

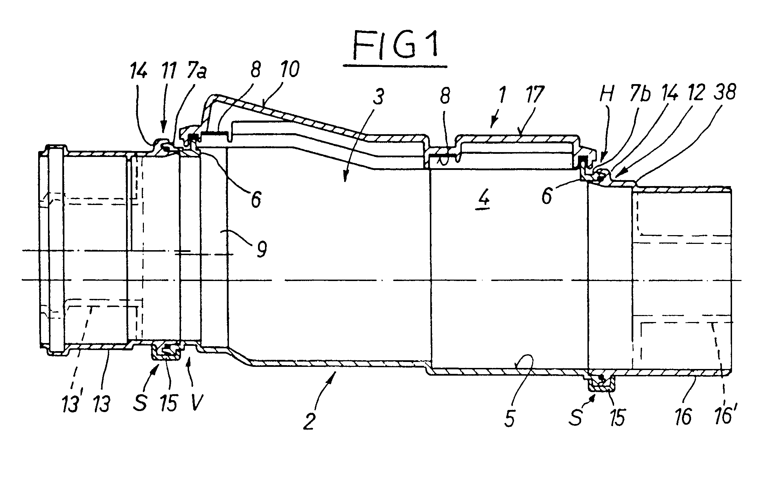

Ein Reinigungsrohr 1 gemäß Figur 1, das für herkömmliches Abwasser oder auch für Fäkalien brauchbar ist, besitzt einen U-förmigen Grundkörper 2, der einen oben offenen Reinigungsschacht 3 begrenzt. Am Vorder- und am Hinterende V, H des Grundkörpers 2 ist dieser offen ausgebildet. Der Reinigungsschacht 3 wird von geraden Seitenwänden 4 und einer U-förmigen Bodenwand 5 begrenzt. Im Bereich seiner obenliegenden Öffnung ist in den Grundkörper 2 ein rahmenartiger Sitz 6 für einen Deckel 17 integriert. Die Querholme des rahmenartigen Sitzes 6 verbinden die obenliegenden Enden der Seitenwände 4 am Vorder- und am Hinterende V, H.

Am Vorderende V ist ein Anschlußkragen 7a angeformt, während am Hinterende H ein gleicher Anschlußkragen 7b angeformt ist. Die Anschlußkrägen 7a, 7b laufen um die Öffnungen an der Vorder- und an der Hinterseite V, H des Grundkörpers 2 um.

In den Wänden 4, 5 des Reinigungsschachtes 3 sind Führungen, z.B. bei 9 angedeutet, für dort einzubringende und mittels des Deckels 17 bzw. darin vorgesehene Widerlager 8 festzulegende Einsatzteile eingeformt. Im Deckel 17 ist ferner eine Erhöhung 10 vorgesehen, die für zusätzliche Armaturen zum Halten oder Betätigen der Einsatzteile benutzt werden kann.

Am Vorderende V ist mittels eines Spannverschlusses S ein Adapterteil 11 angebracht, das bei dem Ausführungsbeispiel von Figur 1 einen angeformten Stumpfende-Anschlußrohrstutzen 13 aufweist. Der Adapterteil 11 besitzt einen Flansch 14, der auf den Anschlußkragen 7a paßt. Die Spannvorrichtung S ist ein Spannband 15, das den Flansch 14 gegen den Anschlußkragen 7a preßt.

Am Hinterende H des Grundkörpers 2 ist ein dem Anschlußkragen 7a gleicher Anschlußkragen 7b angeformt. An diesem ist ein Adapterteil 12 mit seinem Flansch 14 mittels eines Spannverschlusses S in Form eines Spannbandes 15 befestigt. Der Adapterteil 12 weist einen Spitzende-Anschlußrohrstutzen 16 auf, der eine die Einstecktiefe begrenzende Schulter 38 besitzt.

Da die Anschlußkrägen 7a, 7b gleich sind, können die Adapterteile 11, 12 gegeneinander vertauscht werden. Es ist ferner (strichliert angedeutet) möglich, gleiche Adapterteile mit anderer Rohrnennweite der Anschlußrohrstutzen 13, 16 anzubringen, wie dies bei 13' und 16' angedeutet ist. Ferner können an den beiden Anschlußkrägen 7a, 7b gleiche Adapterteile, z.B. zwei Adapterteile 11 oder zwei Adapterteile 12 angebracht werden. Ferner ist es möglich, an zumindest einem Anschlußkragen 7a oder 7b einen Adapterteil anzubringen, der einen beispielsweise in ein Steinzeug-Rohr passenden Anschlußrohrstutzen besitzt. Dabei wird stets derselbe Grundkörper 2 verwendet.

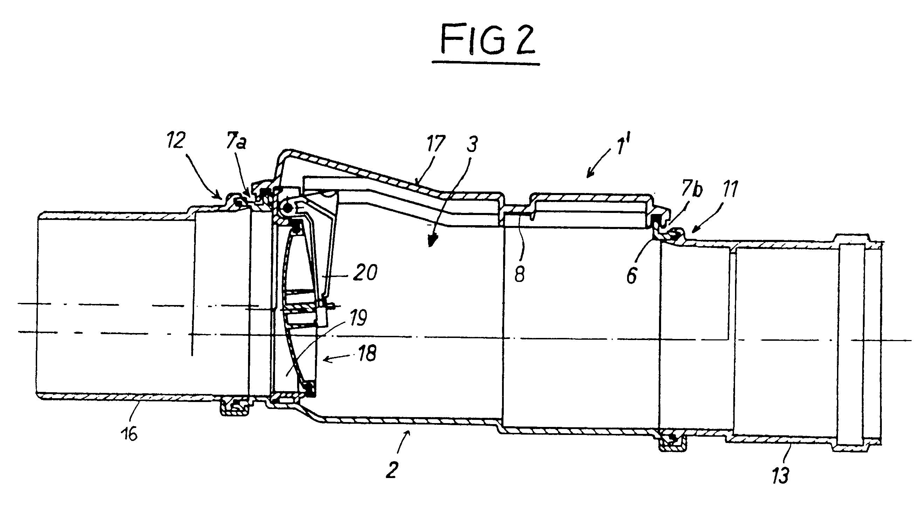

Bei dem Reinigungsrohr 1' von Figur 2 ist am Anschlußkragen 7a der Adapterteil 12 mit dem Spitzende-Anschlußrohrstutzen 16 und am Anschlußkragen 7b der Adapterteil 12 mit dem Stumpfende-Anschluß rohrstutzen 13 angebracht. Ferner ist bei dem Reinigungsrohr 1' von Figur 2, das den gleichen Grundkörper 2 verwendet wie das Reinigungsrohr 1 von Figur 1, als Einsatzteil 18 ein Rückstauverschluß eingesetzt, der aus einem Sitzteil 19 und einer daran schwenkbaren Rückstauverschlußklappe 20 besteht. Der Einsatzteil 18 sitzt in der Führung 9 und wird durch das Widerlager 8 des Deckels 17 festgelegt. Der Einsatzteil 18 könnte auch auf der Höhe des anderen Widerlagers 8 des Deckels 17 in den Reinigungsschacht 3 eingesetzt sein. Es könnten ferner zwei gleichartige oder verschiedene Rückstauverschlüsse oder ein zweiter, willkürlich sperrbarer Rückstauverschluß eingesetzt sein. Denkbar ist ferner, anstelle des gezeigten oder der erwähnten Rückstauverschlüsse Fäkalien-Rückstauverschlüsse einzusetzen, falls das Reinigungsrohr 1 oder 1' für ein Fäkalien-Kanalisationssystem bestimmt ist.

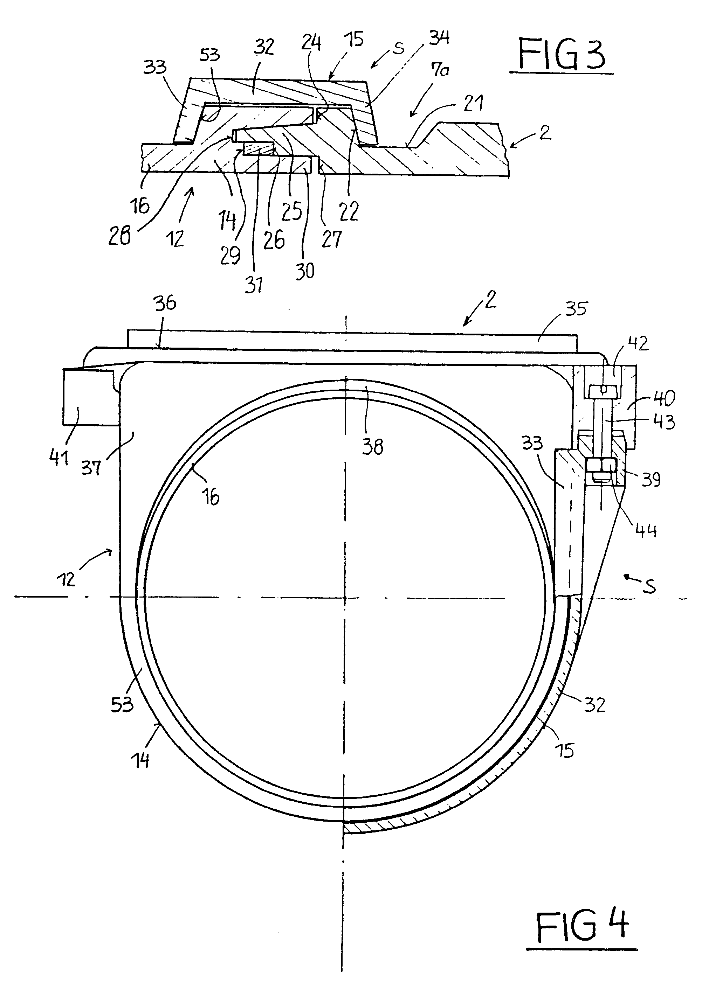

Figur 3 zeigt in einem Horizontalschnitt den Verbindungsbereich des Adapterteils 12 in Figur 2 mit dem Anschlußkragen 7a. Der Anschlußkragen 7a des Grundkörpers 2 besitzt eine umlaufende Nut 21, an die sich von Grundkörper weg eine schräge Schulter 22 anschließt. In einem Abstand hinter der Schulter 22 liegt eine weitere Schulter 24, von der ein keilförmiger Vorsprung 25 nach vorne vorspringt. An der Unterseite des keilförmigen Vorsprungs 25 liegt eine Schulter 26 vor, vor der mit einem Abstand eine weiter Schulter 27 liegt.

Der Anschlußkragen 7a entspricht dem Anschlußkragen 7b. Beide passen in die Flansche 14 beider Adapterteile 11, 12. Der Flansch 14 weist jeweils außen eine schräge Schulter 53 und in seinem dem Grundkörper 2 zuweisenden Stirnende eine umlaufende, keilförmige Nut 28 für den Vorsprung 25 auf. In der Nut 28 ist eine umlaufende Schulter 29 vorgesehen, die auf die Schulter 26 des Anschlußkragens 7a ausgerichtet ist. An die Schulter 29 schließt sich eine Nase 30 an, die auf die Schulter 27 ausgerichtet ist. In die Nut 28 oder vor die Schulter 26 ist eine Dichtung 31 gesetzt.

Das Spannband 15 besitzt in seinem C-förmigen Querschnitt einen geraden Mittelteil 32, von dem sich divergierende Schenkel 33 und 34 wegerstrecken. Ggfs. sind die Schenkel 33, 34 auch senkrecht zum Mittelteil 32 angeordnet und werden erst durch die Spannwirkung im Spannband 15 an den Schultern 53 und 33 auseinandergebogen, um den Flansch 14 fest gegen den Anschlußkragen 7a zu ziehen und die Dichtung 31 dabei zu komprimieren.

In der Stirnansicht von Figur 4 ist vom Grundkörper 2 nur ein Teil des rahmenartigen Sitzes 6 zu sehen, der eine Oberseite 36 für die Auflage des nicht gezeigten Deckels bildet und dort einen hochstehenden Flansch 35 zur Lagesicherung des Deckels trägt. Am Vorderende V des Grundkörpers 2, das offen ist, sind im Anschlußkragen 7a Widerlager 41 und 40 für das Spannband 15 angeformt. In der linken Hälfte von Figur 4 ist das Spannband weggelassen. Vom Adapterteil 12 sind der Spitzende-Anschlußrohrstutzen 16 und der Flansch 14 sowie die Schulter 38 erkennbar. Der Adapterteil 12 besitzt ohrenartige obere Ecken 37, die zwischen die Widerlager 40, 41 passen.

Ein mit 39 bezeichnetes Ende des Spannbandes 15 ist von unten in das Widerlager 40 eingesteckt. In einer Aufnahme 42 des Widerlagers 40 liegt eine Schraube 43, die in das Ende 39 des Spannbandes 15 bzw. in eine dort verdrehbar gehaltene Mutter 44 eingeschraubt ist und das Spannband 15 spannt. Das andere, nicht gezeigte Ende des Spannbandes 15 kann auf gleiche Weise im Widerlager 41 festgelegt sein. Es würde jedoch auch ausreichen, das dortige Ende nur einzuhängen und nur mittels der Schraube 43 zu spannen.

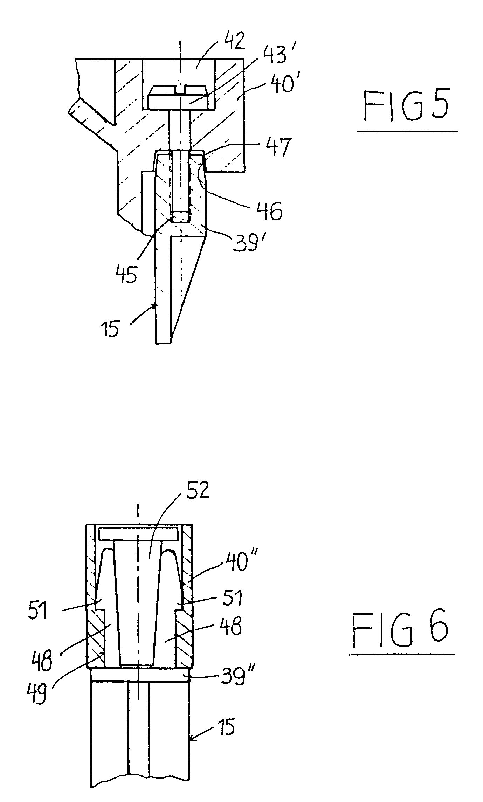

Bei der Ausführungsform von Figur 5 ist das Ende 39′ des Spannbandes 15 kegelstumpfförmig ausgebildet und in eine Öffnung 47 des Widerlagers 40′ von unten eingeführt. In der Aufnahme 42 sitzt die Spannschraube 43, die in eine Gewindebohrung 45 des Endes 39 eingeschraubt ist und das Spannband spannt.

Bei der Ausführungsform von Figur 6 sind am Ende 39″ des Spannbandes 15 zwei Zinken 48 gabelartig und einstückig angeformt, die nach außen weisende Haken 51 aufweisen. Zwischen den beiden Zinken 48 ist ein Zwischenabstand vorhanden, so daß diese zueinanderdrückbar und dann in eine Bohrung 49 im Widerlager 40″ von unten einschiebbar sind. In der Bohrung 49 sind Schultern 50 vorgesehen, hinter die die Haken 51 der Zinken 48 greifen. Von oben ist ein Spreizkörper 52 zwischen die Zinken 48 eingesteckt, der ein selbsttätiges Lösen der Haken 51 unterbindet. Ggfs. sind in der Bohrung 49 mehrere Schultern 50 sägezahnartig hintereinander angeordnet, so daß die Haken 51 zur Variation der Spannkraft des Spannbandes 15 auf unterschiedlichen Höhen verrastbar sind.

Ferner wäre es denkbar, das Spannband 15 zur Gänze um den Anschlußkragen 7a bzw. 7b und den Flansch 14 herumzulegen und das Widerlager 40, 40′ oder 40″ an einem Ende des Spannbandes unmittelbar anzubringen, und das andere Ende 39, 39′ oder 39″ des Spannbandes dann dort festzulegen.

## Ansprüche

1. Reinigungsrohr, insbesondere für Abwässer oder Fäkalien, mit einem U-förmigen Grundkörper (2), der einen oben durch einen in einen rahmenförmigen Deckelsitz (6) einsetzbaren Deckel (17) verschließbaren Reinigungsschacht (3) bildet, in dem herausnehmbar Einsatzteile, wie Rückstauverschlüsse od. dgl. festlegbar sind, mit einem außen an jeder offenen ausgebildeten Grundkörperseite (V, H) umlaufenden Anschlußkragen (7a, 7b) und mit an den Anschlußkragen festgelegten, vorderen und hinteren Anschlußrohrstutzen (13, 16, 13′, 16′), deren jeder einen zum Anschlußkragen passenden rahmenartigen Flansch (14) aufweist, und mit die rahmenartigen Flansche (14) mit den Anschlußkragen (7a, 7b) lösbar verbindenden Befestigungselementen, <u>dadurch gekennzeichnet</u>, daß die beiden Anschlußkragen (7a, 7b) am Grundkörper (2) gleich ausgebildet sind, daß die rahmenartigen Flansche (14) der Anschlußrohrstutzen (13, 16, 13′, 16′) gleich und auf jeden Anschlußkragen (7a, 7b) passend ausgebildet sind, derart, daß die vorderen und hinteren Anschlußrohrstutzen (13, 16, 13′, 16′) am Grundkörper (2) gegeneinander und gegen andere unterschiedliche Anschlußrohrstutzen (13′, 16′) mit zu den Anschlußkragen (7a, 7b) passenden Flanschen (14) austauschbar sind, und daß zum Festlegen jeweils eines Anschlußrohrstutzens (13, 16, 13′ 16′) an jedem Anschlußkragen (7a, 7b) ein aus einem Spannband (15) mit C-förmigem Querschnitt und wenigstens einer Spannvorrichtung bestehender Spannverschluß (S) vorgesehen ist, dessen Spannband (15) den Anschlußkragen (7a, 7b) und den Flansch (14) außen zumindest über einen Teil deren Umfangslängen übergreift.

2. Reinigungsrohr nach Anspruch 1, <u>dadurch gekennzeichnet</u>, daß an der Vorder- bzw. Hinterseite (V, H) des Grundkörpers (2) benachbart zu den Ecken des rahmenförmigen Sitzes (6) zwei Widerlager (40, 40′, 40″, 41) für Enden (39, 30′, 39′) des Spannbandes (15) vorgesehen sind.

3. Reinigungsrohr nach den Ansprüchen 1 oder 2, <u>dadurch gekennzeichnet</u>, daß jeder Anschlußkragen (7a, 7b) – dem Grundkörper (2) zugewandt – eine vorzugsweise schräge Schulter (22) aufweist, daß der Flansch (14) des Anschlußrohrstutzens (13, 16, 13′, 16′) – dem Grundkörper (2) abgewandt – eine vorzugsweise schräge Schulter (53) aufweist, und daß das Spannband (15) mit den Innenseiten der Schenkel (33, 34) seines C-Querschnitts an beiden Schultern (22, 53) anliegt und den Flansch (14) gegen den Anschlußkragen (7a, 7b) preßt.

4. Reinigungsrohr nach Anspruch 3, <u>dadurch gekennzeichnet</u>, daß der Anschlußkragen (7a, 7b) einen umlaufenden, keilförmigen Vorsprung (25) mit einer innenseitigen Schulter (26) aufweist, daß der Flansch (14) eine umlaufende, keilförmige Nut (28)

für den Vorsprung (25) und die Schulter (26) und innenseitig eine vorspringende Nase (30) aufweist, und daß der Anschlußkragen (7a, 7b) in die Nut (28) einführbar ist, bis die Nase (30) an der Schulter (26) vorbeigreift.

5. Reinigungsrohr nach Anspruch 4, dadurch gekennzeichnet, daß in der Nut (28) oder an der Schulter (26) eine umlaufende Dichtung (31) vorgesehen ist.

6. Reinigungsrohr nach wenigstens einem der Ansprüche 1 bis 5, dadurch gekennzeichnet, daß das Spannband (15) mit einem Ende in einem Widerlager (41) festgelegt und mit dem anderen Ende (39, 39', 39'') mit einem im anderen Widerlager (40, 40', 40'') verstellbar abgestützten, die Spannvorrichtung bildenden Spannelement (48, 43', 43) verbunden ist.

7. Reinigungsrohr nach Anspruch 6, dadurch gekennzeichnet, daß das Spannelement (43, 43') eine im Widerlager (40, 40') abgestützte und in das Ende (39, 39') des Spannbandes (15), ggfs. in eine dort verdrehsicher untergebrachte Mutter (44), eingeschraubte Schraube (43, 43') ist.

8. Reinigungsrohr nach wenigstens einem der Ansprüche 1 bis 7, dadurch gekennzeichnet, daß an wenigstens einem Ende (39'') des Spannbandes (15) zwei gabelartig ausgebildete Zinken (48) angeordnet, vorzugsweise einstückig mit dem Spannband (15), sind, die außenseitige Haken (51) tragen, daß im Widerlager (40'') eine dem Ende (39'') des Spannbandes (15) zugewandte Einstecköffnung (49) vorgesehen ist, in der an jeder einem Haken (51) zugewandten Seite wenigstens eine Schulter (50) für den Haken (51) ausgebildet ist, und daß zwischen die Zinken (48) ein Spreizglied (52) eingeschoben ist, das die Zinken (48) spreizt und die Haken (51) auf den Schultern (50) festlegt.

9. Reinigungsrohr nach wenigstens einem der Ansprüche 1 bis 8, dadurch gekennzeichnet, daß das Spannband (15) den Anschlußkragen (7a, 7b) und den Flansch (14) zur Gänze umschlingt und daß seine Enden mittels des Spannelementes und des am Spannband angebrachten Widerlagers unmittelbar miteinander verbunden sind.

## Claims

1. A cleaning pipe, in particular for sewage or faeces, with a U-shaped base body (2) forming a cleaning duct (3) that can be closed at the top by a lid (17) insertable into a frame-shaped lid seat (6), in which duct there may be mounted extractable inserts such as anti-flood valves or similar, with a connecting collar (7a, 7b) passing on the outside round each base body side (V, H) having an open shape, and with front and rear connecting pipes (13, 16, 13', 16') secured to the connecting collars, each of which connecting pipes has a frame-type flange (14) fitting the connecting collar, and with mounting elements detachably connecting the frame-type flanges (14) to the connecting collars (7a, 7b), characterized in that the two connecting collars (7a, 7b) on the base body (2) have the same shape, in that the frame-type flanges (14) of the connecting pipes (13, 16, 13', 16') have the same shape and are designed to fit each connecting collar (7a, 7b), in such a way that the front and rear connecting pipes (13, 16, 13', 16') on the base body (2) may be interchanged and exchanged for other different connecting pipes (13', 16') with flanges (14) fitting the connecting collars (7a, 7b), and in that, for securing one connecting pipe (13, 16, 13', 16') respectively to each connecting collar (7a, 7b), provision is made for a tightening fastener (S) consisting of a tightening strap (15) with a C-shaped cross section and at least one tightening device, the tightening strap (15) of which fastener overlaps the connecting collar (7a, 7b) and the flange (14) on the outside over at least a part of their peripheral lengths.

2. A cleaning pipe according to claim 1, characterized in that on the front and rear sides (V, H) respectively of the base body (2), provision is made in the vicinity of the corners of the frame-shaped seat (6) for two supports (40, 40', 40'', 41) for the ends (39, 30', 39'') of the tightening strap (15).

3. A cleaning pipe according to claims 1 or 2, characterized in that each connecting collar (7a, 7b) has – facing the base body (2) – a preferably slanting shoulder (22), in that the flange (14) of the connecting pipes (13, 16, 13', 16') has – facing away from the base body (2) – a preferably slanting shoulder (53), and in that the tightening strap (15) bears with the inner sides of the arms (33, 34) of its C cross section on both shoulders (22, 53) and presses the flange (14) against the connecting collar (7a, 7b).

4. A cleaning pipe according to claim 3, characterized in that the connecting collar (7a, 7b) has a peripheral V-shaped projection (25) with a shoulder (26) on the inside, in that the flange (14) has a peripheral V-shaped groove (28) for the projection (25) and the shoulder (26), and on the inside, a projection (30), and in that the connecting collar (7a, 7b) can be inserted into the groove (28) until the projection (30) engages past the shoulder (26).

5. A cleaning pipe according to claim 4, characterized in that in the groove (28) or on the shoulder (26), provision is made for a peripheral seal (31).

6. A cleaning pipe according to at least one of the claims 1 to 5, characterized in that the tightening strap (15) is mounted at one end in a support (41) and is, at the other end (39, 39', 39') connected to a tightening element (48, 43', 43) adjustably supported in the other support (40, 40', 40'') which element forms the tightening device.

7. A cleaning pipe according to claim 6, characterized in that the tightening element (43, 43') is a screw (43, 43') supported in the support (40, 40') and screwed into the end (39, 39') of the tightening strap (15) or if applicable, into a nut (44) accommodated therein secured against rotation.

8. A cleaning pipe according to at least one of claims 1 to 7, charactezied in that at least at one end (39") of the tightening strap (15) there are arranged, preferably integrally with the tightening strap (15), two tines (48) of a fork-type design that carry hooks (51) on the outside, in that in the support (40") provision is made for an insertion opening (49) facing the end (39") of the tightening strap (15), in which opening there is formed at each side facing a hook (51), at least one shoulder (50) for the hook (51), and in that a straddling member (52) is inserted between the tines (48), which member pushes the tines (48) apart and secures the hooks (51) on the shoulders (50).

9. A cleaning pipe according to at least one of claims 1 to 8, characterized in that the tightening strap (15) completely envelops the connecting collar (7a, 7b) and the flange (14), and in that its ends are directly interconnected by means of the tightening element and the support arranged on the tightening strap.

## Revendications

1. Tuyau de nettoyage, en particulier pour des eaux usées ou des matières fécales, comprenant un corps de base (2) en U qui constitue un puits de nettoyage (3) pouvant être fermé en haut par un couvercle (17) insérable dans un siège de couvercle (6) en forme de cadre, et dans lequel peuvent être montés de manière amovible des inserts tels que des dispositifs de retenue ou analogues, un collet de raccordement circulaire (7a, 7b) conformé à chaque côté ouvert (V, H) du corps de base, des tubulures de raccordement antérieures et postérieures (13, 16, 13', 16') fixées sur les collets de raccordement et dont chacune est munie d'une bride (14) en forme de cadre adaptée au collet de raccordement, et des éléments de fixation reliant les brides (14) en forme de cadre de manière amovible aux collets de raccordement (7a, 7b), **caractérisé en ce** que les deux collets de raccordement (7a, 7b) sont conformés de manière identique sur le corps de base (2) ; que les brides (14) en forme de cadre des tubulures de raccordement (13, 16, 13', 16') sont identiques et adaptées à chaque collet de raccordement (7a, 7b) de façon à assurer l'interchangeabilité des tubulures de raccordement antérieures et postérieures (13, 16, 13', 16') sur le corps de base (2) entre elles et avec d'autres tubulures de raccordement (13', 16') de conformation différente, avec des brides (14) adaptées aux collets de raccordement (7a, 7b) ; et que, pour la fixation de respectivement l'une des tubulures de raccordement (13, 16, 13', 16') il est prévu sur chaque collet de raccordement (7a, 7b), une fermeture à genouillère (S) composée d'une bande de tension (15) présentant une section transversale en C et d'au moins un dispositif tendeur, dont la bande de serrage (15) entoure le collet de raccordement (7a, 7b) et la bride (14) à l'extérieur sur au moins une partie de leurs circonférences.

2. Tuyau de nettoyage selon la revendication 1, caractérisé en ce que du côté antérieur et respectivement postérieur (V, H) du corps de base (2) sont prévues, au voisinage des coins du siège (6) en forme de cadre, deux butées (40, 40', 40', 41) pour les extrémités (39, 30', 39") de la bande de serrage (15).

3. Tuyau de nettoyage selon l'une des revendications 1 ou 2, caractérisé en ce que chaque collet de raccordement (7a, 7b) présente – en direction du corps de base (2) – un épaulement oblique (22) ; que la bride (14) de la tubulure de raccordement (13, 16, 13', 16') présente – à l'opposé du corps de base (2) – un épaulement (53) de préférence oblique ; et que la bande de serrage (15) est appliquée avec les faces intérieures des branches (33, 34) de sa section transversale en C contre les deux épaulements (22, 53) et qu'elle serre la bride (14) contre le collet de raccordement (7a, 7b).

4. Tuyau de nettoyage selon la revendication 3, caractérisé en ce que le collet de raccordement (7a, 7b) présente une saillie conique circulaire (25) avec un épaulement intérieur (26) ; que la bride (14) comporte une rainure conique circulaire (28) pour la saillie (25) et l'épaulement (26) ainsi que, à l'intérieur, un talon en saillie (30) ; et que le collet de raccordement (7a, 7b) peut être engagé dans la rainure (28) jusqu'à ce que le talon (30) s'étende au-delà de l'épaulement (26).

5. Tuyau de nettoyage selon la revendication 4, caractérisé en ce que dans la rainure (28) ou sur l'épaulement (26) est prévu un joint d'étanchéité circulaire (31).

6. Tuyau selon au moins l'une des revendications 1 à 5, caractérisé en ce que la bande de serrage (15) est bloquée avec l'une de ses extrémités dans une butée (41) et rattachée avec l'autre extrémité (39, 39', 39") à un élément tendeur (48, 43' 43) constituant le dispositif tendeur et prenant appui de manière réglable dans l'autre butée (40, 40', 40").

7. Tuyau de nettoyage selon la revendication 6, caractérisé en ce que l'élément tendeur (43, 43') est une vis (43, 43') prenant appui dans la butée (40, 40') et vissée dans l'extrémité (39, 39') de la bande de serrage (15), éventuellement dans un écrou (44) qui y est logé de manière rigide en rotation.

8. Tuyau de nettoyage selon au moins l'une des revendications 1 à 7, caractérisé en ce qu'à au moins une extrémité (39") de la bande de serrage (15) sont disposées deux dents (48) conformées en fourche et de préférence en une seule pièce avec la bande de serrage (15) qui portent à l'extérieur des crochets (51) ; que dans la butée (40") est prévue une ouverture d'engagement (49) dirigée vers l'extrémité (39") de la bande de serrage (15) et dans laquelle est conformé, de chaque côté dirigé vers un crochet (51), au moins un épaulement (50) pour le crochet (51) ; et qu'entre les dents (48) est engagé un écarteur (52) qui écarte les dents (48) et bloque les crochets (51) sur les épaulements (50).

9. Tuyau de nettoyage selon au moins l'une des revendications 1 à 8, caractérisé en ce que la bande de serrage (15) enveloppe entièrement le collet de raccordement (7a, 7b) et la bride (14) ; et que ses extrémités sont directement rattachées l'une à l'autre au moyen du tendeur et de la butée placée sur la bande de serrage.

FIG1

FIG 2

FIG 3

FIG 4

FIG 5

FIG 6